# EUROPÄISCHE PATENTANMELDUNG

(11) **EP 2 141 449 A2**
(43) Veröffentlichungstag der Anmeldung: **06.01.2010**
(21) Anmeldenummer: 09163090.5
(22) Anmeldetag: 18.06.2009
(51) Int. Cl.: G01B 21/26, G01M 17/06

(54) **Fahrzeugradaufnahmevorrichtung**

(30) Priorität: 04.07.2008 DE 102008031763
(71) Anmelder: MAHA Maschinenbau Haldenwang GmbH & Co. KG, 87490 Haldenwang (DE)
(72) Erfinder: Grotz, Jürgen, 87487 Wiggensbach (DE)
(74) Vertreter: MERH-IP Matias Erny Reichl Hoffmann

(57) **Zusammenfassung**

Die Erfindung betrifft eine Schiebevorrichtung zum im Wesentlichen spannungsfreien Aufnehmen von Fahrzeugrädern mit einer Trägereinheit (2) und einer Oberplatte (3), die auf der Trägereinheit (2) verschiebbar gelagert ist, wobei mit der Oberplatte (3) ein Fahrzeugrad zumindest in horizontaler Richtung im Wesentlichen nahezu kräftefrei und momentenfrei lagerbar ist.

## Beschreibung

Die Erfindung betrifft eine Schiebevorrichtung zum im Wesentlichen spannungsfreien Aufnehmen von Fahrzeugrädern, die an einem Fahrzeug montiert sind, wobei die Vorrichtung eine besonders zuverlässige Vermessung der Kennwerte der Radstellung wie beispielsweise Sturz-und Spurwinkel der Räder eines Fahrzeuges ermöglicht. Dabei kann eine hohe Messpräzision über eine lange Lebensdauer der Schiebevorrichtung sichergestellt werden.

Als Bindeglied zwischen Fahrbahn und Fahrzeugaufbau sind Fahrwerke, bestehend aus Rad und Radaufhängung, ein maßgeblicher Faktor für die Fahrdynamik eines Fahrzeugs und gleichzeitig auch maßgeblich für die Fahrsicherheit. Moderne Fahrwerke weisen nicht nur einen im Wesentlichen vertikalen Freiheitsgrad auf, um Fahrbahnunebenheiten auszugleichen, sondern bewegen sich bei Ein- und Ausfedervorgängen bzw. Lenkvorgängen auf präzise vordefinierten Hüllkurven, wie beispielsweise bei Mehrlenkerachsen. Durch geeignete Radführungsgeometrien werden Bewegungen des Aufbaus reduziert, wobei für die Radstellungen bei Lenk- und Federbewegungen sowie für die Übertragung der Kräfte zwischen der Fahrbahn und dem Fahrzeugreifen kinematische Größen wie beispielsweise, Spurwinkel, Sturzwinkel und Spreizungswinkel von besonderer Bedeutung sind. Aufgrund der Komplexität moderner Fahrwerke und des Einflusses der kinematischen Radkennwerte auf die Fahrsicherheit ist bei der Einstellung der Spurwinkel und Sturzwinkel eine besonders hohe Präzision notwendig.

Zur Sturz- und Spurwinkelmessung werden in der Praxis optische Messsysteme verwendet, die berührungslos die Kennwerte des Fahrzeugrades messen während das Fahrzeug auf einem Prüfstandsboden bzw. Werkstattboden steht.

Bei derartigen aus dem Stand der Technik bekannten Vorrichtungen tritt jedoch das Problem auf, dass aufgrund von Seitenkräften in der Radaufstandsfläche, die beispielsweise durch Lenkbewegungen oder Ein-/Ausfederbewegungen der Räder erzeugt werden, Verspannungen in den Fahrwerkskomponenten auftreten, die zu Messfehlern bei der Ermittlung der Sturz- und Spurwerte führen.

Die vorliegende Erfindung hat die Aufgabe, eine Vorrichtung anzugeben, mit der Fahrzeugräder derart aufgenommen werden können, dass die bei der Spur- bzw. Sturzvermessung auftretenden Messfehler reduziert werden.

Diese Aufgabe wird durch eine Vorrichtung und ein Verfahren mit den Merkmalen der unabhängigen Ansprüche gelöst. Die abhängigen Ansprüche geben vorteilhafte Ausführungsbeispiele der vorliegenden Erfindung an.

Zur Lösung dieser Aufgabe lehrt die Erfindung eine Schiebevorrichtung zum im Wesentlichen spannungsfreien Aufnahmen von Fahrzeugrädern mit einer Trägereinheit und einer Oberplatte, wobei die Oberplatte auf der Trägereinheit verschiebbar gelagert ist und wobei mit der Oberplatte ein Fahrzeugrad zumindest in horizontaler Richtung im Wesentlichen nahezu kräftefrei und/oder momentenfrei lagerbar ist. Damit kann auf besonders einfache Weise das zu untersuchende Fahrzeugrad von Seitenkräften, die im Wesentlichen in eine Richtung quer zur Fahrzeuglängsachse wirken, bzw. Momenten, die um eine Fahrzeughochachse wirken, nahezu befreit werden, wodurch Verspannungen im Fahrzeugrad bzw. in den Fahrwerkskomponenten reduziert werden und die Messgenauigkeit erhöht wird.

Weiterhin kann die Losbrechkraft und/oder das Losbrechmoment im Wesentlichen unabhängig von den äußeren Abmessungen, insbesondere der Länge, und/oder dem Gewicht der Oberplatte sein. Dies ermöglicht die Verwendung von langen Oberplatten, wodurch insbesondere eine Verschiebung der Verschiebeeinheit entlang der Fahrzeuglängsachse nicht mehr nötig, um die Position der Verschiebeeinheit an den Achsabstand des zu prüfenden Fahrzeugs anzupassen. Dadurch wird sichergestellt, dass auch bei unterschiedlichen Achsabständen die Fahrzeugräder auf der Oberplatte aufstehen. Hieraus ergibt sich der Vorteil, dass Fahrzeuge mit unterschiedlichsten Achsabständen geprüft werden können, ohne dass eine Anpassung an das Fahrzeug durch eine Verschiebung der Vorrichtung notwendig ist.

Weiterhin kann zwischen der Trägereinheit und der Oberplatte zumindest eine Lagereinheit vorgesehen sein, mit der eine Lateralbewegung der Oberplatte im Wesentlichen senkrecht zu einer Fahrzeugachse und/oder eine Rotationsbewegung der Oberplatte im Wesentlichen um eine Fahrzeughochachse durchführbar ist. Das Vorsehen einer Lagereinheit bietet den Vorteil, dass die Reibungskräfte zwischen der Oberplatte und der Trägereinheit reduziert werden und dadurch auch kleine Kräfte im Fahrzeugrad neutralisierbar sind.

Weiterhin kann ein Arretierungsmittel vorgesehen sein, mit dem die Oberplatte in Bezug zur Trägereinheit fest arretierbar ist, wobei im Rad auftretende im Wesentlichen in horizontaler Richtung wirkende Kräfte über die Oberplatte durch das Arretierungsmittel in die Trägereinheit überleitbar sind. Dabei kann mit dem Arretierungsmittel die Oberplatte in Bezug zur Trägereinheit in eine vorbestimmte Position überführbar sein. Hieraus ergeben sich Vorteile, dass die Schiebevorrichtung vor Beschädigungen durch übermäßige Beanspruchung geschützt werden kann. Solche Schäden treten insbesondere dann auf, wenn in der Radaufstandsfläche Lateralkräfte auftreten, die ein zulässiges Maß überschreiten. Solche Kräfte entstehen beispielsweise durch ein zu schnelles bzw. schräges Auffahren eines Fahrzeugs auf die Schiebevorrichtung, wobei die Oberplatte eine derart große Verschiebung relativ zur Trägereinheit durchführt, dass die die Schiebevorrichtung beschädigt wird. Ferner bietet das Arretierungsmittel den Vorteil, dass nach einer Spurvermessung, nach der das Fahrzeug von der Schiebevorrichtung entfernt wurde, die Oberplatte mit dem Arretierungsmittel in eine vorbestimmte, ursprüngliche Ausgangsposition zurückgeschoben werden kann, falls die Oberplatte nicht selbständig in ihre Ausgangslage zurückkehrt.

Weiterhin kann die Vorrichtung ein Positionierungsmittel aufweisen, mit dem die Lagereinheit in eine vorbestimmte Position überführbar ist, wenn die Oberplatte nicht mit einem Fahrzeugrad in Kontakt steht und sich in einem entarretierten Zustand befindet.

Weiterhin können mit dem Positionierungsmittel sowohl die Lagereinheit wie auch die Oberplatte in eine vorbestimmte Position überführbar sein, wenn die Oberplatte nicht mit einem Fahrzeugrad in Kontakt steht und sich in einem entarretierten Zustand befindet. Dies bietet den Vorteil, dass die Schiebevorrichtung nach einem Messvorgang bzw. vor einem Messvorgang, wenn kein Fahrzeug auf der Schiebevorrichtung aufgefahren ist, selbsttätig in eine vorbestimmte Ausgangsposition überführt werden kann.

Weiterhin kann das Positionierungsmittel ein Federelement sein und/oder das Arretierungsmittel ein Absteckbolzen oder eine Positionierungskulisse sein.

Weiterhin kann die Lagereinheit einen Käfig und Wälzkörper in Form von Kugeln aufweisen, wobei der Käfig zumindest teilweise oder vollständig mit Kugeln befüllt sein kann.

Weiterhin kann die Trägereinheit zumindest eine Einrichtung zum Abführen von Feuchtigkeit und/oder Schmutzpartikeln aufweisen. Die Einrichtung zum Abführen von Feuchtigkeit und/ oder Schmutzpartikeln kann derart angeordnet sein, dass ein Zugang von Feuchtigkeit und/oder Schmutzpartikel zu der Lagereinheit verhinderbar ist. Dabei kann die Einrichtung zum Abführen von Feuchtigkeit und/oder Schmutzpartikeln alternativ in Form einer Nut oder einer Rille ausgebildet sein. Somit kann wirksam verhindert werden, dass Schmutz bzw. Feuchtigkeit auf Gleitflächen der Lagereinheit gerät, was zu einer Erhöhung des Losbrechmomentes und damit zu einer Reduzierung der Messgenauigkeit führen könnte und als Folge eine Verschlechterung der Reibungseigenschaften der Lagereinheit hätte.

Weiterhin kann die Einrichtung zum Abführen von Feuchtigkeit und/oder Schmutzpartikeln eine Ablaufrille sein, die zumindest abschnittsweise im Wesentlichen parallel zu einer Kante der Oberplatte verläuft. Dabei kann die Ablaufrille umlaufend auf einer Oberfläche der Trägereinheit ausgebildet sein.

Weiterhin kann die Trägereinheit zumindest zwei Ablaufrillen aufweisen, die im Wesentlichen parallel zu einer Kante der Oberplatte und/oder parallel zueinander verlaufen, wobei in einer Position, in der die Oberplatte bezüglich der Trägereinheit maximal verschoben ist, die Oberplatte zumindest eine Ablaufrille über ihre gesamte Länge zumindest teilweise überdeckt. Dabei kann die Oberplatte die Ablaufrille über ihre gesamte Länge vollständig und über ihre Breite zumindest teilweise überdecken. Hieraus ergibt sich der Vorteil, dass Wasser und Schmutzpartikel stets von der Oberplatte in eine Rille bzw. zwischen zwei Rillen abtropfen und entlang der Ablaufrille von der Lagereinheit weggeführt werden. Eine derartige Anordnung bietet den Vorteil, dass keine zusätzlichen Dichtungselemente nötig sind und somit die Anzahl der Bauteile reduziert werden kann.

Weiterhin kann ein Führungselement vorgesehen sein zur Festlegung der Richtung der Lateralbewegung zwischen der Trägereinheit und der Oberplatte und/oder zur Festlegung der Rotationsbewegung der Oberplatte im Wesentlichen um eine Fahrzeughochachse. Dadurch können auf besonders einfache Weise die maximal zulässigen Bewegungsgrenzen in Bezug zur Trägereinheit festgelegt werden. Darüber hinaus kann im Sinne einer Funktionsintegration das Führungselement auch als Sicherungsmittel dienen und ein Abrutschen der Oberplatte von der Trägereinheit im nicht arretierten Zustand verhindern.

Weiterhin kann eine Mess- und Auswerteeinheit vorgesehen sein, mit der der Spurwinkel jeweils des rechten und/oder des linken Rades einer Fahrzeugachse ausgebbar ist. Damit kann auf besonders einfache Weise ein Gesamtsystem realisiert werden, mit dem eine ganzheitliche Spurwinkelmessung ermöglicht wird, ohne dass zusätzliche Messeinrichtungen an die Verschiebevorrichtung angeschlossen werden müssen.

Weiterhin kann die Vorrichtung als mobile Einheit ausgebildet sein und/oder an Fahrschienen von Hebebühnen und/oder Prüfständen nachrüstbar sein. Hieraus ergibt sich der Vorteil, dass die Vorrichtung durch das Bedienpersonal an verschiedenen Anwendungsorten einsetzbar ist.

Ferner kann eine Hebevorrichtung insbesondere zum Anheben von Fahrzeugen mit zumindest einer Hubeinheit, zumindest einer Fahrschiene und zumindest einer Schiebevorrichtung vorgesehen sein, wobei eine Schiebevorrichtung mit einer Trägereinheit im Wesentlichen fest mit der Fahrschiene verbunden ist.

Zusammenfassend sollen im Folgenden weitere Merkmale und Vorteile der Erfindung genannt werden. Die Trägereinheit und die Oberplatte können aus Aluprofilen bestehen, wodurch Korrosionsprobleme eliminiert werden. Dies ist ein wesentlicher Vorteil dieser Vorrichtung, da die genannten Bauteile häufig in Kontakt mit korrosiven Substanzen wie Wasser bzw. Streusalz kommen. Weiterhin kann die Vorrichtung dadurch gekennzeichnet sein, dass alle fest miteinander verbundenen Teile verschraubt, verklebt und/ oder vernietet sind. Neben dem Vorteil einer leichten Montage können auch die Nachteile von Schweißverbindungen eliminiert werden, die beispielsweise in Form von Bauteilverzug auftreten. Somit sind keine aufwendigen Nacharbeiten wie Ausrichten von Bauteilen oder spannungsfreies Glühen der Bauteile notwendig. Dabei kann gleichzeitig eine hohe Genauigkeit und Leichtgängigkeit der Vorrichtung erreicht werden. Ein weiterer Vorteil der Aluminiumprofile ist in dem geringen Gewicht zu sehen, wodurch die komplette Schiebeplatte leicht von einem Einsatzort zu einem anderen transportiert werden kann. Weiterhin kann die Lagereinheit in Form eines Kugellagers mit einem Kugelkäfig ausgebildet sein, der vollständig mit Kugeln befüllt ist. Eine derartige Lagereinheit gewährleistet eine optimale Lastenverteilung und garantiert damit die Leichtgängigkeit der Schiebevorrichtung. Dadurch kann sichergestellt werden, dass das Losbrechmoment, bzw. die Losbrechkraft nahezu unabhängig von der Länge der Schiebvorrichtung ist. Dies bietet den Vorteil, dass lange Oberplatten verwenden werden können, wodurch eine Anpassung der Position der Verschiebevorrichtung an den Achsabstand zu prüfender Fahrzeuge nicht notwendig ist und somit die Prüfdauer verkürzt wird. Weiterhin können zwischen der Trägereinheit und der Oberplatte in deren Längsrichtung mehrere Lagereinheiten vorgesehen sein. Durch einen derartigen modularen Aufbau kann die Oberplatte verlängert oder verkürzt aufgebaut werden, wobei lediglich die Aluprofile und eine Deckplatte auf die entsprechende Länge verlängert oder verkürzt werden müssen.

Im Folgenden wird die Erfindung anhand lediglich Ausführungsbeispiele darstellenden Zeichnungen ausführlich erläutert. Es zeigen in schematischer Darstellung:
- Figur 1: eine perspektivische Ansicht der Schiebevorrichtung;
- Figur 2: eine Draufsicht auf die Schiebevorrichtung;
- Figur 3: eine Schnittansicht der Schiebevorrichtung entlang der Schnittlinie A-A aus Figur 2;
- Figur 4: eine Seitenansicht der Schiebevorrichtung auf eine linke Endseite der Vorrichtung, die zur in Figur 2 gezeigten Schnittlinie A-A senkrecht steht;
- Figur 5: eine Detailansicht des in Figur 3 gezeigten Ausschnitts Z;
- Figur 6: eine Draufsicht auf eine weitere Ausführungsform der Schiebevorrichtung, wobei die Oberplatte entfernt ist;
- Figur 7: eine perspektivische Ansicht der Oberplatte der in Figur 6 gezeigten Ausführungsform; und
- Figur 8: eine Draufsicht auf eine Positionierungskulisse.

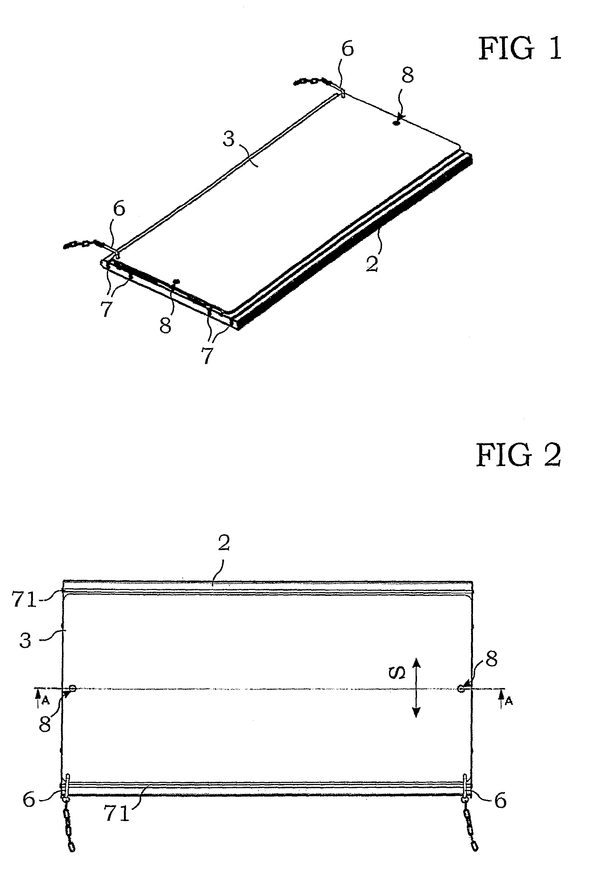

In der Figur 1 ist der Gesamtaufbau der Schiebevorrichtung dargestellt, wobei eine im Wesentlichen rechteckige, flache Oberplatte 3 parallel zu einem Trägereinheit 2 angeordnet ist. Die Oberplatte 3 weist mittig an ihren längsseitigen Endbereichen jeweils ein Führungselement 8 auf, das in einer Führungsschiene 84, die in der Trägereinheit 2 vorgesehen ist, gleiten kann. An den unteren, längsseitigen Ecken der Oberplatte 3 sind Bohrungen vorgesehen, durch die Arretierungsmittel 6 in Form von Absteckbolzen steckbar sind.

Die Trägereinheit 2 ist mit ihrer längsseitigen Mittelachse parallel und in einer Hochrichtung deckungsgleich mit einer längsseitigen Mittelachse der Oberplatte 3 kongruent ausgerichtet. Die Trägereinheit 2 weist Bohrungen auf, die bei der oben beschriebenen Ausrichtung mit den Bohrungen in den längsseitigen, unteren Ecken der Oberplatte 3 fluchten. Somit kann jeweils ein Arretierungsmittel 6 durch die fluchtenden Bohrungen der Oberplatte 3 und der Trägereinheit 2 geführt werden, so dass eine relative Verschiebung zwischen der Oberplatte 3 und der Trägereinheit 2 ausgeschlossen ist.

Parallel zu den Längsseiten der Trägereinheit 2 sind Ablaufrilleen 7 in der Trägereinheit 2 vorgesehen. In Figur 1 sind diese durch Rillen bzw. Nuten 7 dargestellt. Die Abführungseinheiten 7 dienen dazu, Wassersowie Schmutzpartikel abzuführen, die von den zu untersuchenden Rädern auf die Oberplatte 3 tropfen und von der Oberplatte 3 auf die Trägereinheit 2 gelangen.

Figur 2 zeigt eine Draufsicht auf die Verschiebeeinheit. Aus Figur 2 ist ersichtlich, dass die Oberplatte 3 bei einer mittigen Ausrichtung in Bezug auf die Trägereinheit mit ihren Längskanten die äußeren Ablaufrillen 71 nicht überdeckt, sondern nur die inneren Ablaufrillen 7. Diese inneren Ablaufrillen sind in der Figur 2 nicht erkennbar, da sie durch die Oberplatte 3 verdeckt sind. Somit gelangen Schmutz- bzw. Wasserpartikel von der Oberplatte 3 zwischen die inneren und die äußeren Ablaufrillen 71, wodurch sichergestellt wird, dass selbst bei einer Bewegung dieser Partikel zur Mittelachse der Trägereinheit 2 die Partikel stets in die inneren Ablaufrillen gelangen und somit nicht in die Lagereinheit 4 kommen können. Diese Konstruktion erweist sich dahingehend als vorteilhaft, dass dadurch Korrosionserscheinungen an der Lagereinheit verhindert werden und eine hohe Lebensdauer der Lagereinheit 4 bei gleichzeitig hoher Funktionsgenauigkeit der Verschiebevorrichtung realisiert werden kann. Vorteilhafterweise beträgt die Losbrechkraft einen Wert von 12 - 18 Newton, bevorzugt jedoch 15 Newton bzw. das Losbrechmoment einen Wert von 2 - 8 Newton-Meter, bevorzugt jedoch 5 Newton-Meter.

In einer maximalen Auslenkung der Verschiebeeinheit ist die Oberplatte bezüglich der Trägereinheit 2 höchstens soweit verschoben, dass eine Längskante der Oberplatte 3, die sich in Richtung des Doppelpfeils S bewegt, oberhalb der inneren Ablaufrille 72 befindet. Konstruktionsbedingt ist eine Verschiebung einer Längskante über die innere Ablaufrille 72 hinweg in Richtung der Mittelachse der Trägereinheit 2, repräsentiert durch die Schnittlinie A-A, ausgeschlossen. Damit wird sichergestellt, dass auch in einer maximalen Auslenkung der Oberplatte 3 Schmutz- und Wasserpartikel von der Oberplatte 3 zumindest in die innere Ablaufrille 72 tropfen und nicht zwischen die Lagereinheit 4 und die innere Ablaufrille 72. Eine derartige Auslenkung ist in der Figur 2 nicht dargestellt, jedoch ergibt sich aus der vorgehenden Beschreibung für den Fachmann eindeutig, wie diese Position erreicht wird, nämlich durch eine Verschiebung der Oberplatte 3 entlang des Pfeils S relativ zur Trägereinheit 2.

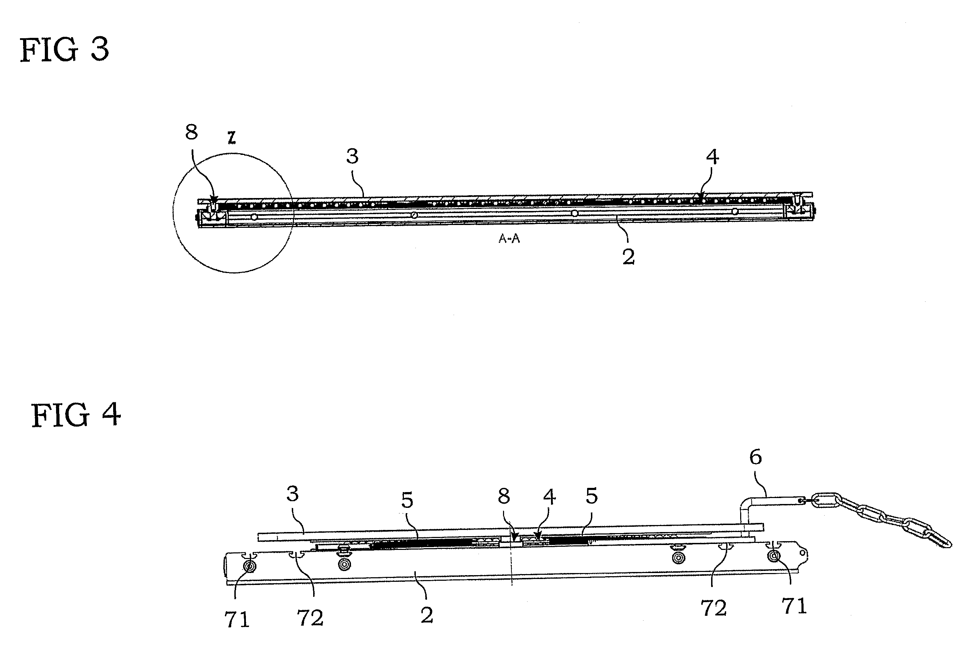

In der Figur 3 ist eine Schnittansicht der Verschiebevorrichtung dargestellt entlang der Schnittlinie A-A aus Figur 2. Dabei ist zu erkennen, dass die Oberplatte 3 aus Vollmaterial, Stahl, Aluminium, Verbundwerkstoff und/oder Edelstahl, besteht. Die Oberplatte liegt auf zumindest einer Lagereinheit 4 auf, die sich wiederum auf der Trägereinheit 2 abstützt. Die Trägereinheit 2 besteht aus Profilen, vorzugsweise aus Aluminium oder einem rostfreien Edelstahl, die an ihren Längsseiten über Verbindungselemente miteinander fest verbunden sind. Die in Querrichtung der Trägereinheit 2 liegenden Aluminium bzw. Edelstahlprofile weisen an ihren oberen Flächen Rillen bzw. Nuten auf, um einen Wasser- bzw. Schmutzpartikelablauf zu gewährleisten. Dieser Ablauf erfolgt in Längsrichtung der Aluminiumprofile und somit in Längsrichtung der Trägereinheit 2.

Figur 4 zeigt eine Seitenansicht der Schiebevorrichtung von einer Seite, die im Wesentlichen senkrecht zur Schnittachse A-A steht. In dieser Ansicht sind die Ablaufrillen 7 besonders gut zu erkennen. Dabei weisen die äußeren Ablaufrillen 71 einen größeren Abstand zu einer Mittellinie A-A der Trägereinheit 2 auf als die inneren Ablaufrillen 72. Ferner sind die inneren Ablaufrillen 72 durch die Oberplatte 3 in vertikaler Richtung abgedeckt.

Die Oberplatte 3 ist über zumindest eine Lagereinheit 4 auf der Trägereinheit 2 abgestützt. Ferner sind Positionierungsmittel 5, die als Federn ausgebildet sind, zu erkennen. Die Positionierungsmittel 5 sind an einem Ende über eine Halterung 51 fest mit der Trägereinheit 2 verbunden und an ihrem anderen Ende mit der Lagereinheit 4 verbunden. Weiterhin ist das Führungselement 8 zu erkennen, das mit der Oberplatte 3 verbunden ist und in der Trägereinheit 2 geführt ist. In der dargestellten Position befindet sich die Verschiebeeinheit in einem arretierten Zustand, wobei das Arretierungsmittel 6 durch die fluchtenden Bohrungen der Oberplatte und der Trägereinheit 2 gesteckt ist.

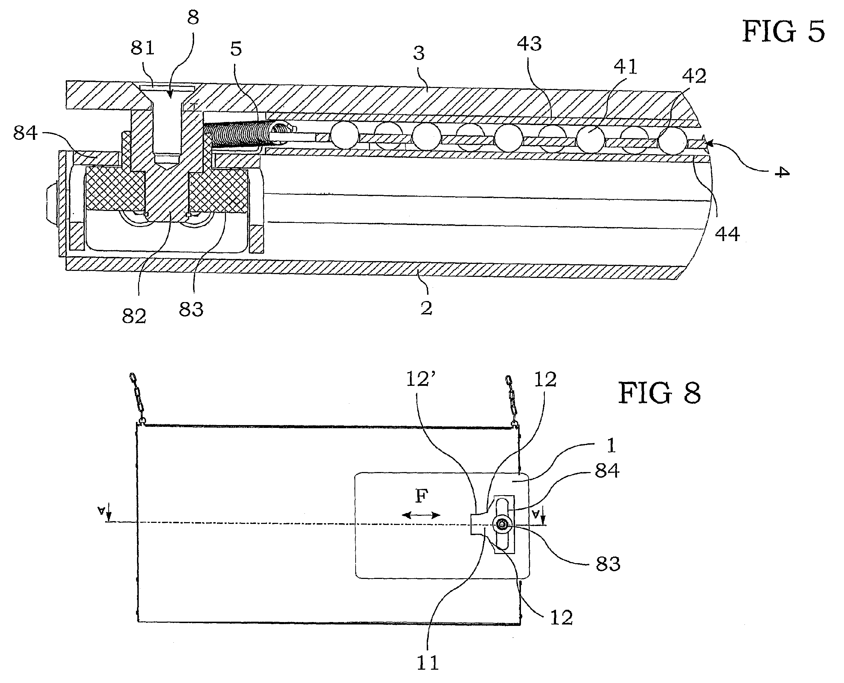

Figur 5 zeigt eine Vergrößerung des Details Z aus Figur 3 in einer seitlichen Ansicht. Diese Seitenansicht ist im Wesentlichen senkrecht zu der Richtung des Verschiebepfeils S aus Figur 2. Gleiche Bezugszeichen wie in den Figuren 1, 2, 3 und 4 kennzeichnen gleiche Elemente. In der Figur 5 ist der Aufbau der Lagereinheit 4 gut zu erkennen. In der dargestellten Lagereinheit 4 werden als Wälzkörper 41 Kugeln verwendet, die in einem Käfig 42 gehalten sind. In einer nicht dargestellten Ausführungsform der Erfindung können jedoch auch Rollen als Wälzkörper verwendet werden. Die Lagereinheit 4 weist eine erste Lauffläche 43 auf, die mit der Oberplatte 3 verbunden ist, und eine zweite Lauffläche 44, die mit der Trägereinheit 2 verbunden ist. Bei einer Verschiebung der Oberplatte 3 relativ zu der Trägereinheit 2 in eine Richtung, die senkrecht auf die der Zeichnungsebene steht, rollen die Wälzkörper 41 sowohl auf der ersten Lauffläche 43 wie auch auf der zweiten Lauffläche 44 ab. Durch das Gewicht der Oberplatte 3 wird ein Rutschen bzw. eine Kombination aus Rollen und Rutschen zwischen den Wälzkörpern und den Laufflächen ausgeschlossen.

Darüber hinaus ist das Positionierungsmittel 5 zu erkennen, das an einem Ende mit dem Käfig 42 der Lagereinheit 4 in Verbindung steht, und an einem zweiten, in dieser Darstellung verdeckten Ende mit der Trägereinheit 2 verbunden ist. Bei einer Verschiebung der Oberplatte 3 aus ihrer Ruheposition heraus wird auch die Lagereinheit 4 und damit der Käfig 42 verschoben. Mithilfe des Positionierungsmittels 5 kann sichergestellt werden, dass die Lagereinheit 4 und damit auch die Oberplatte 3 in ihre Ausgangsposition zurückgeführt wird, wenn die Oberplatte 3 nicht mit einem Fahrzeugrad belastet wird.

Zwischen der Verschiebebewegung der Oberplatte 3 und der Lagereinheit 4 besteht ein linearer Zusammenhang derart, dass die Verschiebung der Oberplatte betragsmäßig stets doppelt so groß ist wie die Verschiebung der Lagereinheit 4 bzw. des Käfigs 42.

Weiterhin ist in Figur 5 der detaillierte Aufbau des Führungselements 8 beschrieben. Das Führungselement 8 weist ein Verbindungselement 81 auf, über das es mit der Oberplatte 3 verbunden ist. Das Verbindungselement 81 kann dabei eine Schraube oder ein Niet sein, der die Oberplatte 3 mit einem Halteelement 82 verbindet. Der Haltebolzen 82 kann als Buchse bzw. Gleitlager dienen, auf dem ein Gleitelement 83 angeordnet ist. Das Gleitelement 83 kann wahlweise eine Rolle, ein Rad oder ein durch einen niedrigen Haftreibungskoeffizienten ausgezeichnetes Gleitlager, beispielsweise aus Teflon, sein. Das Gleitelement 83 ist in einer Führungsschiene 84, die fest mit der Trägereinheit 2 in Verbindung steht, geführt. Die Führungsschiene kann wahlweise direkt in der Trägereinheit 2 ausgebildet sein oder als zusätzliches Bauteil fest mit der Trägereinheit 2 verbunden sein. Vorzugsweise ist die Führungsschiene 84 ein im Trägerelement 2 ausgebildetes Langloch, dessen Längsachse im Wesentlichen senkrecht zu der Schnittlinie A-A, aus Figur 2, steht bzw. parallel zum Verschiebungsvektor S aus Figur 2 ausgerichtet ist.

In der dargestellten Ausführungsform sind die Positionierungsmittel 5 Zugfedern, um den Käfig 42 mittig in Bezug zur Trägereinheit 2 zu zentrieren. Der Haltebolzen 82 dient als Achse für eine Rolle 83, die als Führung der Oberplatte 3 sowie zur Begrenzung deren maximalen seitlichen Auslenkung fungiert. Darüber hinaus stellt die Rolle 83 eine Fixierung für die Oberplatte 3 dar, so dass ein Abheben der Oberplatte 3 ausgeschlossen ist, so lange das Verbindungselement 81 nicht gelöst wird.

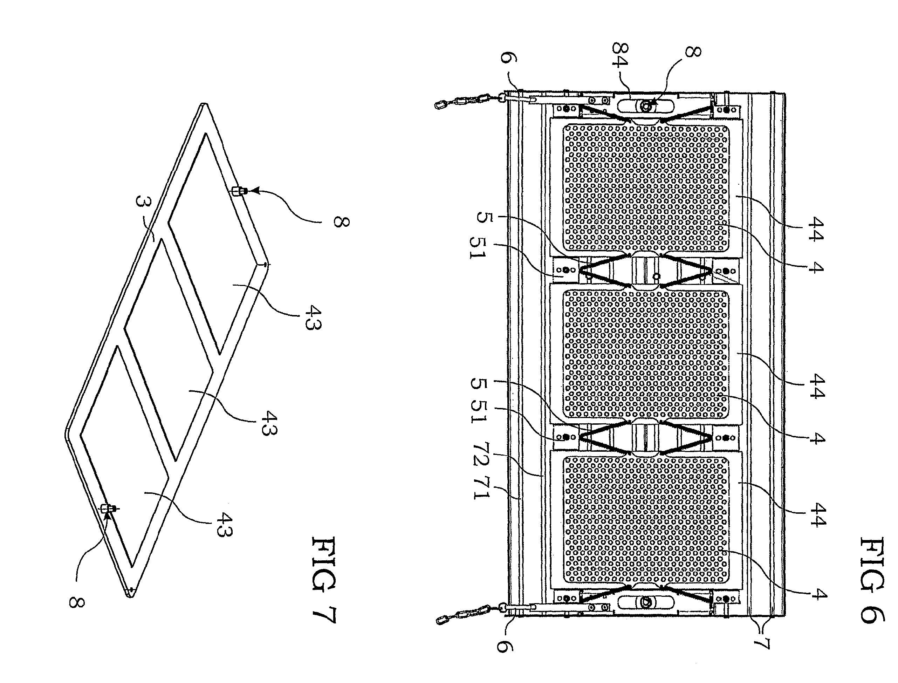

In Figur 6 ist eine Draufsicht auf die Schiebevorrichtung dargestellt, wobei die Oberplatte 3 entfernt wurde. Diese Darstellung zeigt eine weitere Ausführungsform der erfindungsgemäßen Schiebevorrichtung, wobei mehrere in Längsrichtung der Trägereinheit 2 hintereinander angeordnete Lagereinheiten 4 vorgesehen sind. Dabei steht jede Lagereinheit 4 über eine zweite Lauffläche 44 mit der Trägereinheit 2 in Verbindung.

In dieser Ansicht sind die Positionierungsmittel 5 zu erkennen, die an jeweils einem ihrer Enden mit der Lagereinheit 4 verbunden sind und an dem anderen Ende über eine Halterung 51 fest mit der Trägereinheit 2 in Verbindung stehen. Dabei steht jede Lagereinheit 4 über vier Positionierungsmittel 5 mit der Trägereinheit 2 in Verbindung. Die Halterung 51 dient auch als Führung der Lagereinheiten 4 bei Bewegungen senkrecht zur Mittelachse A-A der Oberplatte 3 entsprechend der Richtung des Doppelpfeils S aus Figur 2.

Ferner sind in dieser Ansicht die oben beschriebenen Führungsschienen 84 gut erkennbar, die in Form von Langlochbohrungen ausgebildet sind, die sich senkrecht zu der Längskante der Trägereinheit 2 erstrecken und spiegelsymmetrisch zu einer längsseitigen Symmetrielinie der Trägereinheit 2 angeordnet sind.

Figur 6 zeigt ferner auch eine alternative Anordnung des Arretierungsmittels 6. Dabei sind die Bohrungen, in die das Arretierungsmittel 6 eingeführt wird, nicht direkt in der Trägereinheit 2 vorgesehen, sondern in einem zusätzlichen Element, das fest an der Trägereinheit 2 befestigt ist. Diese Bohrungen fluchten ebenfalls mit den Bohrungen in der Oberplatte 3, wie bereits in der ersten Ausführungsform aus Figur 1 und 2 beschrieben.

Figur 7 zeigt eine Oberplatte 3, die zu der zweiten Ausführungsform der Erfindung gehört, die in der Figur 6 beschrieben ist. In dieser Oberplatte 3 ist für jede der Lagereinheiten 4 jeweils eine erste Lauffläche 43 vorgesehen. In einem zusammengesetzten Zustand wird die in Figur 7 dargestellte Oberplatte 3 so auf die Trägereinheit 2 aufgesetzt, dass die ersten Laufflächen 43 mit den Wälzkörpern 41 der Lagereinheiten 4 in Kontakt kommen.

Figur 8 zeigt ein alternatives Arretierungsmittel 6 in Form einer Positionierungskulisse 1. Diese Positionierungskulisse 1 ist an der Unterseite, d.h. an einer der Oberplatte 3 abgeneigten Seite, der Trägereinheit 2 in Längsrichtung der Trägereinheit 2 verschiebbar gelagert. In der Figur 8 ist das Gleitelement 83 sowie die Führungsschiene 84 zu erkennen. Wenn nach einer Auslenkung, die Oberplatte 3 in dieser ausgelenkten Position stehen bleibt und nicht selbsttätig in die Ausgangslage zurückkehrt, kann mit Hilfe der Positionierungskulisse 1 die Oberplatte 3 wieder mittig ausgerichtet werden. Hierfür ist die Positionierungskulisse 1 spiegelsymmetrisch zur Mittelachse A - A der Trägereinheit 2 ausgerichtet und weist einen Führungsabschnitt 11 mit Seitenwänden 12, 12' auf. Durch eine Verschiebung der Positionierungskulisse 1 entlang des Führungspfeils F gelangt das Gleitelement 83 mit den Seitenwänden 12 in Kontakt und wird in seine mittige Ausgangslage zurückgeführt. Die Positionierungskulisse 1 hat zusätzlich eine Arretierungsfunktion. Wenn das Gleitelement 83 sich in einem Führungsabschnitt 11 befindet zwischen den Seitenwänden 12' wird es durch diese Seitenwände 12' an einer Bewegung im Wesentlichen in einer Richtung senkrecht zu der Richtung des Doppelpfeils F gehindert. Damit kann auf die oben beschriebenen Absteckbolzen als Arretierungsmittel verzichtet werden. In einer alternativen, nicht dargestellten Ausführungsform der Erfindung kann die Positionierungskulisse 1 zwei Aussparungen in Form von Führungsabschnitten 11, aufweisen, mit unterschiedlich stark geneigten Seitenwänden 12, 12'. Dabei befindet sich in jedem Führungsabschnitt 11 ein Gleitelement 83, wobei beide Führungselemente 8 bei der Betätigung der Positionierkulisse 1 gleichzeitig betätigt werden und somit die Oberplatte 3 in ihre mittige Ausgangsposition überführt wird.

In einer weiteren Ausführungsform der Erfindung können als Arretierungsmittel 6 sowohl Absteckbolzen wie auch zumindest eine der oben beschriebenen Positionierungskulissen 1 vorgesehen werden.

Nachfolgend soll die Funktionsweise der Vorrichtung anhand eines beispielhaften Ablaufs eines Messverfahrens näher erläutert werden.

Die Schiebevorrichtung befindet sich dabei mit einem Werkstattboden bzw. mit einer Fahrschiene einer Hebebühne in Verbindung. Dabei ist die Trägereinheit 2 ortsfest mit dem Werkstattboden oder der Fahrschiene verbunden. Die Oberplatte 3 ist mithilfe der Arretierungsmittel 6 gegenüber der Trägereinheit 2 gegen Verschieben gesichert. Nun wird ein Fahrzeug auf die Schiebevorrichtung aufgefahren, wobei ein Rad auf der Oberplatte 3 abgestellt wird. Anschließend werden die Arretierungsmittel 6 entfernt. Seitenkräfte in dem Rad erzeugen eine Bewegung der Oberplatte 3 in Richtung des Doppelpfeils S bis die Seitenkräfte auf den Wert null abgesunken sind. In diesem Zustand erfolgt die Spurvermessung des Rades. Nach erfolgter Spurvermessung wird das Fahrzeug von der Schiebevorrichtung herunter gefahren, wobei die Oberplatte 3 durch die Positionierungsmittel 5 in ihre Ausgangslage zurückgeführt wird. Die Arretierungsmittel 6 werden durch die fluchtenden Bohrungen gesteckt.

Alternativ kann mit den Arretierungsmitteln 6 die Oberplatte 3 gänzlich in ihre Ausgangsposition überführt werden, falls diese selbsttätig nicht vollständig erreicht wird.

In einer weiteren alternativen Ausführungsform kann mithilfe der Positionierungskulisse 1 die Oberplatte 3 in ihre Ausgangsposition zurückgeführt werden.

Es ist gleichermaßen im Sinne der Erfindung, bei der Spurvermessung an jedem Rad einer Achse gleichzeitig jeweils eine Verschiebevorrichtungen zu verwenden. Somit kann gleichzeitig der Spurwinkel an dem rechten und linken Rad einer Achse bzw. an mehreren Achsen gleichzeitig bestimmt werden.

Die im Vorangehenden genannten Merkmale und beispielhaft beschriebenen Ausführungsformen der vorliegenden Erfindung können teilweise oder als Ganzes beliebig miteinander kombiniert werden, um weitere Ausführungsformen zu bilden, die an entsprechende Anwendungen der Erfindung angepasst sind. Sofern sich solche Ausführungsformen für einen Fachmann aus den vorgenannten Ausführungsbeispielen ergeben, sollen diese als mit den vorgenannten Ausführungsbeispielen implizit offenbart gelten. Alle in der vorliegenden Beschreibung angegebenen Wertebereiche umfassen auch die Randwerte.

### Bezugszeichen liste:

- 1 Positionierungskulisse
- 11 Führungsabschnitt
- 12 Seitenwände
- 2 Trägereinheit
- 3 Oberplatte
- 4 Lagereinheit
- 41 Wälzkörper (Kugeln/Trommel)
- 42 Käfig
- 43 erste Lauffläche
- 44 zweite Lauffläche
- 5 Positionierungsmittel
- 51 Halterung
- 6 Arretierungsmittel
- 7 Ablaufrille
- 71 äußere Ablaufrille
- 72 innere Ablaufrille
- 8 Führungselement
- 81 Verbindungselement (Schraube, Niet..)
- 82 Haltelement (Buchse, Gleitlager...)
- 83 Gleitelement
- 84 Führungsschiene

## Patentansprüche

1. Schiebevorrichtung zum im Wesentlichen spannungsfreien Aufnehmen von Fahrzeugrädern, mit
- einer Trägereinheit (2), und
- einer Oberplatte (3), die an der Trägereinheit (2) verschiebbar gelagert ist, wobei
- mit der Oberplatte (3) ein Fahrzeugrad zumindest in horizontaler Richtung im Wesentlichen nahezu kräftefrei und momentenfrei lagerbar ist.

2. Vorrichtung nach Anspruch 1, wobei
die Losbrechkraft und/oder das Losbrechmoment im Wesentlichen unabhängig von den äußeren Abmessungen, insbesondere der Länge, und/oder dem Gewicht der Oberplatte (3) ist.

3. Vorrichtung nach Anspruch 1 oder 2, wobei
zwischen der Trägereinheit (2) und der Oberplatte (3) zumindest eine Lagereinheit (4) vorgesehen ist, mit der
- eine Lateralbewegung der Oberplatte (3), im Wesentlichen senkrecht zu einer Fahrzeuglängsachse, und/oder
- eine Rotationsbewegung der Oberplatte (3), im Wesentlichen um eine Fahrzeughochachse durchführbar ist.

4. Vorrichtung nach zumindest einem der Ansprüche 1 bis 3, wobei ein Arretierungsmittel (6) vorgesehen ist mit dem die Oberplatte (3) in Bezug zur Trägereinheit (2) fest arretierbar ist, wobei im Rad auftretende, im Wesentlichen horizontal wirkende Kräfte über die Oberplatte (3), durch das Arretierungsmittel (6) in die Trägereinheit (2) überleitbar sind, und/oder mit dem Arretierungsmittel (6) die Oberplatte (3) in Bezug zur Trägereinheit (2) in eine vorbestimmte Position überführbar ist.

5. Vorrichtung nach zumindest einem der Ansprüche 1 bis 4, wobei ein Positionierungsmittel (5) vorgesehen ist, mit dem die Lagereinheit (4) in eine vorbestimmte Position überführbar ist, wenn die Oberplatte (3) nicht mit einem Fahrzeugrad in Kontakt steht und sich in einem entarretierten Zustand befindet.

6. Vorrichtung nach zumindest einem der Ansprüche 1 bis 5, wobei mit dem Positionierungsmittel (5) sowohl die Lagereinheit (4) wie auch die Oberplatte (3) in eine vorbestimmte Position überführbar sind, wenn die Oberplatte (3) nicht mit einem Fahrzeugrad in Kontakt steht und sich in einem entarretierten Zustand befindet.

7. Vorrichtung nach zumindest einem der Ansprüche 1 bis 6, wobei das Positionierungsmittel (5) ein Federelement ist, und/oder das Arretierungsmittel (6) ein Absteckbolzen und/oder eine Positionierungskulisse ist.

8. Vorrichtung nach zumindest einem der Ansprüche 1 bis 7, wobei die Lagereinheit (4) einen Käfig (42) und Wälzkörper (41) in Form von Kugeln aufweist, wobei der Käfig (42) mit Kugeln befüllt ist.

9. Vorrichtung nach zumindest einem der Ansprüche 1 bis 8, wobei die Trägereinheit (2) zumindest eine Einrichtung zum Abführen von Feuchtigkeit und/oder Schmutzpartikel, aufweist, die derart an der Trägereinheit (2) angeordnet sind, dass ein Zugang der Feuchtigkeit und/oder Schmutzpartikel zu der Lagereinheit (4) verhinderbar ist.

10. Vorrichtung nach zumindest einem der Ansprüche 1 bis 9, wobei die Einrichtung zum Abführen von Feuchtigkeit und/ oder Schmutzpartikel zumindest eine Ablaufrille (7) ist, die zumindest abschnittsweise im Wesentlichen parallel zu einer Kante der Oberplatte (3) verläuft.

11. Vorrichtung nach zumindest einem der Ansprüche 1 bis 10, wobei an der Trägereinheit (2) zwei Ablaufrillen (7) die zueinander im Wesentlichen parallel verlaufen vorgesehen sind, wobei in einer Position, in der die Oberplatte (3) bezüglich der Trägereinheit (2) maximal verschoben ist, die Oberplatte (3) zumindest eine Ablaufrille (7) über ihre gesamte Länge zumindest teilweise überdeckt.

12. Vorrichtung nach zumindest einem der Ansprüche 1 bis 11, wobei ein Führungselement (8) vorgesehen ist,
- zur Festlegung der Richtung der Lateralbewegung zwischen der Trägereinheit (2) und der Oberplatte (3) und/oder
- zur Festlegung der Rotationsbewegung der Trägereinheit (2) um die Fahrzeughochachse.

13. Vorrichtung nach zumindest einem der Ansprüche 1 bis 12, wobei eine Mess- und Auswerteeinheit vorgesehen ist, mit der der Spurwinkel jeweils des rechten und/oder des linken Rades einer Fahrzeugachse ausgebbar ist.

14. Vorrichtung nach zumindest einem der Ansprüche 1 bis 13, wobei die Vorrichtung als mobile Einheit ausgebildet ist und/ oder an Fahrschienen von Hebebühnen und/ oder Prüfständen nachrüstbar ist.

15. Hebevorrichtung, insbesondere zum Anheben von Fahrzeugen, mit
- zumindest einer Hubeinheit,
- zumindest einer Fahrschiene, und
- zumindest einer Schiebevorrichtung nach einem der Ansprüche 1 bis 14, wobei
die Trägereinheit (2) der Schiebevorrichtung im Wesentlichen fest mit der Fahrschiene in Verbindung steht.
